# FASCICULE DE BREVET EUROPEEN

(11) **EP 3 472 394 B1**
(45) Date de publication et mention de la délivrance du brevet: **07.10.2020**
(21) Numéro de dépôt: 17746155.5
(22) Date de dépôt: 16.06.2017
(51) Int. Cl.: E03B 7/04, F24D 17/00

(54) **PROCÉDÉ ET DISPOSITIF POUR ÉCONOMISER L'ÉNERGIE CALORIFIQUE ET L'EAU DANS UNE INSTALLATION SANITAIRE**
VERFAHREN UND VORRICHTUNG ZUM SPAREN VON WÄRMEENERGIE UND WASSER IN EINER SANITÄREN EINRICHTUNG
METHOD AND DEVICE FOR SAVING HEAT ENERGY AND WATER IN A SANITARY FACILITY

(30) Priorité: 17.06.2016 FR 1670320; 15.03.2017 FR 1770253
(43) Date de publication de la demande: 24.04.2019
(73) Titulaire: Perrin, David, 88250 La Bresse (FR)
(72) Inventeur: Perrin, David, 88250 La Bresse (FR)
(74) Mandataire: Dennemeyer & Associates S.A.
(86) Numéro de dépôt international: PCT/FR2017/000119
(87) Numéro de publication internationale: WO 2017/216432

(56) Documents cités:
- WO-A1-2010/083644
- WO-A2-2004/070279
- FR-A1- 2 572 790
- JP-A- S5 878 025

## Description

### Domaine technique

La présente invention concerne un procédé et un dispositif destinés à délivrer rapidement, sans gaspillage l'Eau Chaude Sanitaire (ECS) aux points de puisage, par exemple des robinets ou des mitigeurs.

### Etat de l'art

En règle générale, lorsque l'on ouvre un robinet pour obtenir de l'eau chaude ou mitigée, nous devons régulièrement attendre de longues secondes avant d'être desservie à la température souhaitée. Pendant ce temps-là, la tuyauterie d'alimentation se remplie inutilement d'eau chaude et l'eau potable qui est notre ressource naturelle la plus précieuse, s'écoule directement vers le réseau d'assainissement. Le volume d'ECS gaspillé à chaque utilisation peut atteindre 3 à 5 litres suivant la configuration du réseau.
Il nous arrive même parfois, de demander machinalement de l'eau chaude au robinet pour l'utiliser directement à température ambiante (froide), sans même attendre qu'elle arrive. L'eau utilisée n'est pas gaspillée dans ce cas, mais durant cette phase d'utilisation, le tuyau d'alimentation se remplit inutilement d'eau chaude qui ensuite se refroidit.
Le cumul des utilisations représente un gaspillage important qui influe de façon significative sur notre confort, sur l'écosystème et sur nos factures d'eau et d'énergie (en moyen en France l'ECS à 65°C (Celsius) coûte environ trois fois plus cher que l'eau froide) .

Ce temps d'attente est principalement fonction :
- De la distance que doit parcourir l'ECS avant d'arriver à l'utilisateur
- Du débit d'ECS demandé par l'utilisateur
- De la section du tuyau d'alimentation
- De la nature des composants qui constituent le réseau (ex : tuyau en acier ou en plastique).

De façon traditionnelle pour obtenir l'ECS au point de puisage, nous distinguons trois phases d'écoulement :
- Dans un premier temps, l'eau s'écoule à température ambiante ; il s'agit de l'eau contenue dans le tuyau d'alimentation, qui s'est refroidie après la dernière utilisation.
- L'eau monte ensuite progressivement en température ; il s'agit de l'ECS provenant de la source qui s'est refroidie au contact des différents composants du réseau (nourrices de distribution, tuyaux, raccords, flexibles, robinets...) avant d'arriver à l'utilisateur.
- Enfin l'eau s'écoule à la température demandée.

Pour remédier au problème, les architectes et les installateurs se contentent généralement de placer le moyen de production d'ECS ou la réserve dans l'habitat, au plus près des points de puisage afin de minimiser la longueur des tuyauteries.
Pour y remédier plus efficacement certaines installations sont pourvues:
- soit, d'une boucle de recirculation, communément appelée "bouclage". Il en existe de nombreuses variantes, dans lesquelles l'eau chaude circule en boucle par intermittence ou non, grâce à une pompe, entre la source d'ECS et les différents points de puisage. Les tuyaux d'alimentation sont de cette façon toujours remplis d'eau chaude. L'inconvénient majeur étant que même si les tuyauteries sont bien isolées thermiquement, la constante déperdition calorifique du fluide, rend à la longue le procédé très énergivore. C'est la solution décrite dans la demande de brevet WO2010/083644 qui propose une installation sanitaire comprenant une pompe motorisée, un tuyau de petite section ainsi qu'un capteur qui commande la marche et l'arrêt de la motopompe. La motopompe de faible puissance qui assure la circulation en boucle fermée d'un faible débit d'ECS puisé à la source, est commandée lorsque la température détectée sur le circuit retour est inférieur à une consigne.
- soit, d'une petite réserve appelée " chauffe-eau sous évier " qui est encombrante, onéreuse et qui n'alimente généralement qu'un seul robinet.
- ou encore, d'un petit chauffe-eau instantané sous évier ou robinet instantané qui nécessite une puissance électrique considérable, pour n'offrir qu'un faible débit à un seul robinet à la fois.

En résumé, de nos jours pour disposer rapidement de son ECS, il faut soit qu'elle se trouve à proximité du point de puisage lorsqu'on en a besoin ou soit la produire sur place à la demande.
L'invention permet de remédier aux inconvénients des installations sanitaires de l'art antérieur.

### Résumé de l'invention

Le procédé, selon l'invention, pour économiser l'énergie calorifique et l'eau dans une installation sanitaire, comportant une source d'eau chaude au moins un point de puisage et au moins un tuyau dont la section intérieure de passage est inférieure à 60mm2, est caractérisé en ce qu'il comprend les étapes suivantes :
- détection d'une demande d'eau chaude au point de puisage,
- transfert instantané d'un débit d'eau chaude de la source au point de puisage via le tuyau de petite section, au moyen d'une pompe motorisée commandée en fonction de la demande au point de puisage.
Selon un premier perfectionnement, la pression dans le tuyau est rétablie en amont du point de puisage de façon à disposer d'une pression standard en plomberie sanitaire au point de puisage.
Selon un deuxième perfectionnement, l'eau chaude est mise sous pression en amont du tuyau de petite section au moyen d'une pompe motorisée commandée par des moyens de détection, de façon à fournir rapidement et à la température souhaitée par l'utilisateur, l'intégralité du débit d'eau chaude demandée par l'utilisateur au point de puisage.
Selon une variante de l'invention, le procédé est mis en œuvre dans des installations sanitaires traditionnelles déjà pourvues d'au moins un tuyau traditionnel d'alimentation d'eau chaude basse pression entre la source d'eau chaude et au moins un point de puisage.
Le débit dans le tuyau de petite section est de préférence asservi au besoin de l'utilisateur au point de puisage.
L'invention concerne également le dispositif de mise en œuvre de l'invention.
Ce dispositif permet le transfert instantané ou quasi-instantané d'eau chaude aux points de puisage, par exemple des robinets ou des mitigeurs. Il comprend une source d'eau chaude, au moins un point de puisage et au moins un premier tuyau pourvu d'une première extrémité reliée à la source d'eau chaude et une deuxième extrémité reliée au point de puisage, le dit dispositif étant caractérisé en ce qu'il comprend :
- une motopompe comprenant une entrée adaptée pour être reliée à la source d'eau chaude et une sortie,
- au moins un deuxième tuyau de petite section, comprenant une première extrémité reliée à la sortie de la dite motopompe et une deuxième extrémité adaptée pour être reliée à la deuxième extrémité du premier tuyau ou au point de puisage,
- un ou des moyens de détection aptes à commander la motopompe en fonction de la demande d'eau chaude au point de puisage.
Selon un premier perfectionnement de l'invention, le tuyau de petite section chemine à l'intérieur du tuyau.
Selon un deuxième perfectionnement de l'invention, les moyens de commande comprennent au moins un capteur de débit détectant la circulation du fluide dans le tuyau ou un capteur de pression détectant la pression dans le tuyau. Selon un troisième perfectionnement de l'invention, le capteur de débit détecte le sens de l'écoulement ainsi que l'absence de flux dans le tuyau, de façon à interpréter la demande de l'utilisateur au point de puisage pour y asservir le débit dans le tuyau, évitant ou réduisant ainsi au minimum toute recirculation d'eau chaude dans le tuyau.
Le procédé et le dispositif, selon l'invention, offrent de nombreux avantages; ils permettent de transférer rapidement l'eau chaude de la source à l'utilisateur, à chaque fois qu'il y a un besoin. Le procédé est des plus écologique; il permet notamment d'économiser la grande quantité d'énergie qui est systématiquement gaspillée lors de la distribution d'eau chaude avec les installations de l'art antérieur.
Le procédé et le dispositif selon l'invention sont applicables à toutes les habitations individuelles ou collectives mais également aux locaux industriels, et plus généralement dans tous les bâtiments où il est souhaitable d'économiser l'eau sanitaire et l'énergie.
Le dispositif selon l'invention s'adapte à tous les réseaux, qu'ils soient neufs ou préexistants.

L'invention pourra être mieux comprise à la lecture de la description détaillée et à l'examen des figures qui vont suivre.

### Brève description des figures

La figure 1 illustre un premier mode de réalisation du dispositif selon l'invention.
La figure 2 représente le dispositif de la figure 1, pourvu de moyens de réguler la puissance de la motopompe en fonction de la demande au point de puisage.
La figure 3 représente un deuxième mode de réalisation du dispositif selon l'invention.
La figure 4 est le schéma hydraulique d'une installation pourvue de 3 points de puisage, et utilisant le mode de réalisation de la figure 3.
Les figures 5 et 6 représentent deux exemples de raccordement et de fonctionnement (flux hydraulique) de l'invention au niveau des robinets mitigeurs.

### Description détaillée

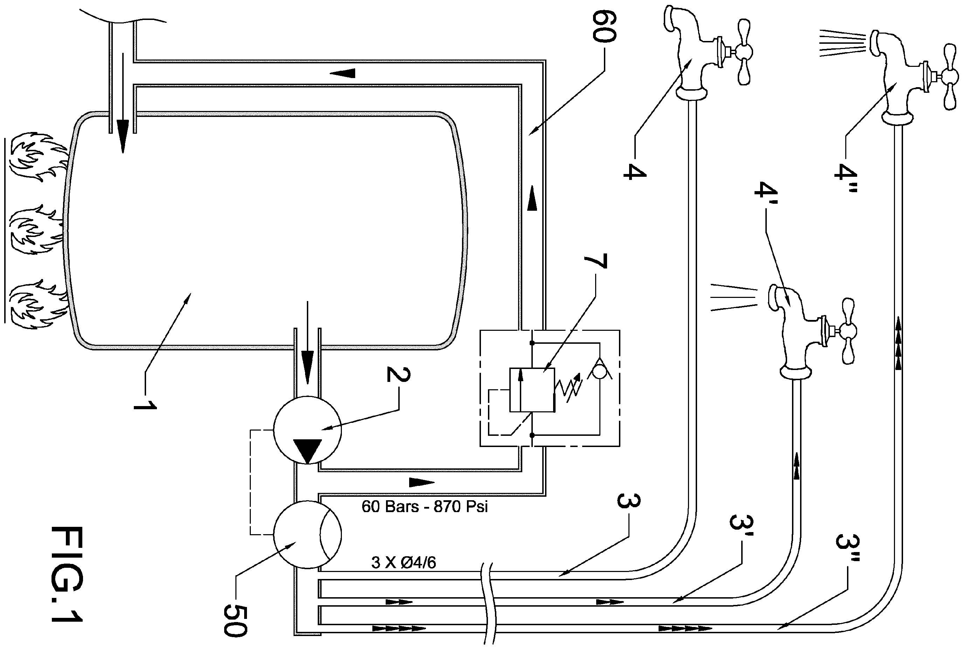

Les phases de fonctionnement du dispositif présentés à la figure 1 sont :
1) L'utilisateur ouvre un robinet (4)
2) Le capteur de débit (50) détecte un flux provenant de la source d'eau chaude (1).
3) La motopompe (2) démarre et fournit un débit d'ECS constant sous une pression prédéfinie au régulateur de pression (7) (exemple: 60 bars).
4) Selon la demande au point de puisage, une partie du débit va à l'utilisateur via le tuyau de petite section (3) et l'autre partie retourne à la source via le circuit (60) .

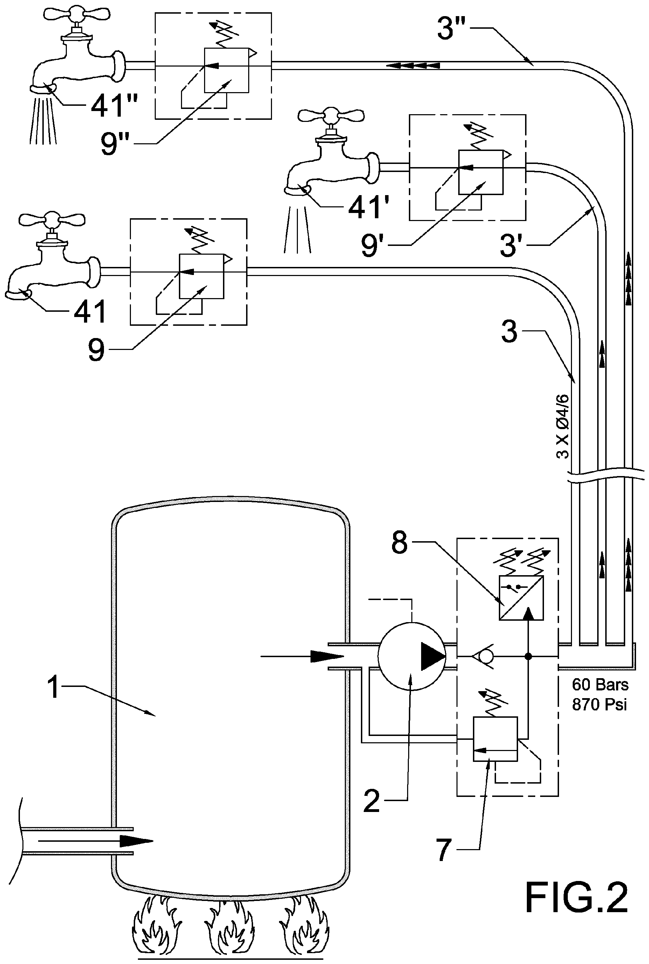

La figure 2 présente une amélioration du dispositif de la figure 1, qui permet de réguler la puissance de la motopompe en fonction de la demande au point de puisage. Pour ce faire, un capteur de pression (8) permet de maintenir une "forte" pression constante dans le réseau. Dès lors que cette pression chute, comme c'est le cas lorsque l'on ouvre un robinet ou que l'on demande un débit d'ECS plus important, la motopompe augmente automatiquement son débit. Et inversement, si la pression dépasse la valeur de consigne (exemple : 60 bars), comme c'est le cas lorsqu'on demande un débit moindre, la motopompe réduit automatiquement son débit jusqu'à s'arrêter si le robinet est fermé. Pour ce faire, un automate en communication avec le capteur de pression (8) commande un variateur de vitesse chargé de réguler la rotation du moteur de la pompe(2). Le régulateur de pression (9) permet de retrouver une pression standard au point de puisage (généralement 3 bars), permettant ainsi l'utilisation de robinet domestique standard (41) .

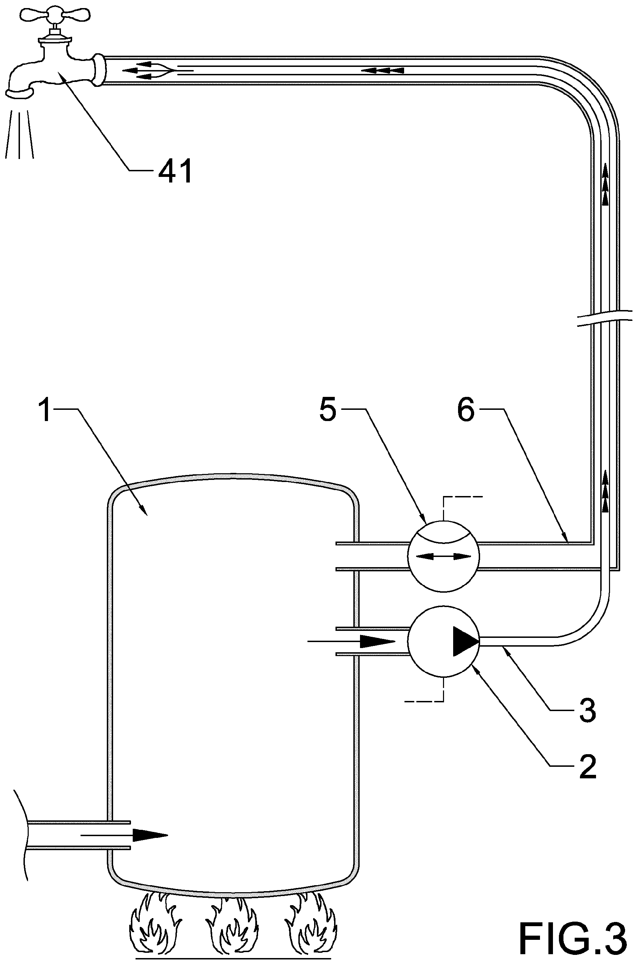

La figure 3 présente un dispositif qui offre plus de confort ; il permet d'obtenir l'ESC rapidement, quel que soit le débit demandé. Il s'adapte facilement sur une installation existante qui compte déjà un tuyau (6) d'alimentation d'eau chaude. Contrairement au cas précédant, il permet d'obtenir un débit d'eau chaude normale même si le dispositif est hors service. Son procédé écologique d'asservissement prévient de tout transfert d'ECS dans le tuyau (6) et donc de toute recirculation.

Le tuyau (3) débouche et s'écoule directement dans le tuyau (6) au plus près du robinet. De ce fait, la pression dans le tuyau de petite section (3) décroît tout le long du parcours pour s'équilibrer progressivement à celle du réseau qui est généralement réglée à 3 bars. Le tuyau (6) joue ainsi un rôle de régulateur de pression, qui permet l'utilisation de robinets domestiques standard (basse pression).

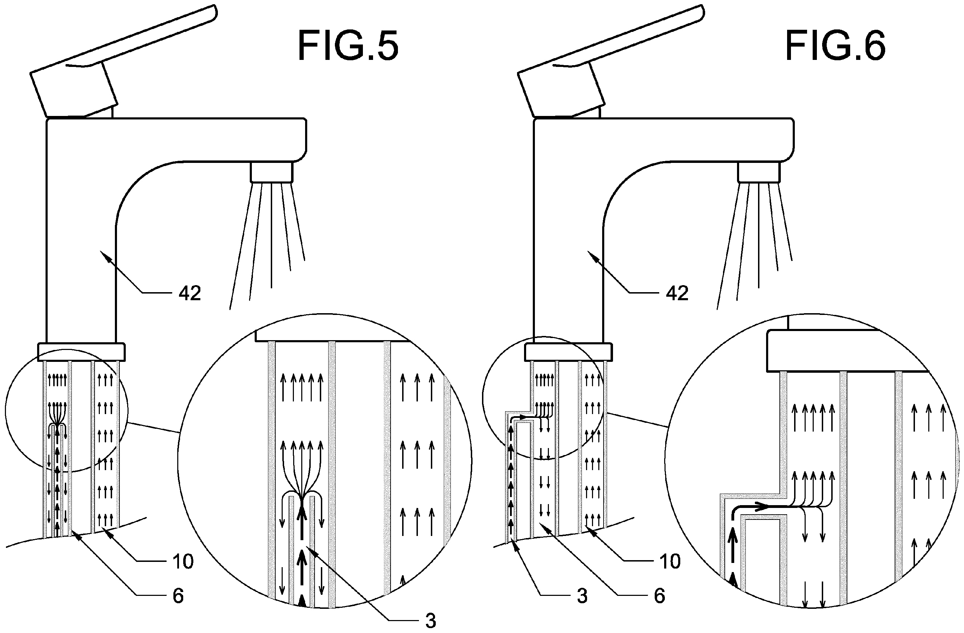

Nota : Pour diverses raisons pratiques et/ou esthétiques, dans une installation neuve ou si le réseau préexistant le permet, le tuyau (3) de petite section peut au moyen de raccords spécifiques, être introduit et acheminé totalement ou partiellement dans le tuyau (6) jusqu'au robinet (voir FIG.3 ET FIG.5). Ou, selon une autre variante, il peut faire partie intégrante du tuyau (6) lors de sa fabrication et former un seul ensemble de section géométrique quelconque.

Pour interpréter la demande de l'utilisateur au point de puisage, un capteur de débit bidirectionnel (5) permet de détecter le sens de circulation du fluide ainsi que l'absence de flux dans le tuyau (6).
Un automate qui est en communication avec le capteur de débit (5) est le variateur de vitesse. Cet automate coordonne les cycles de distribution et régule la vitesse de rotation de la motopompe pour faire varier son débit. Nota : un robinet qui ouvrirait ou étranglerait le passage du fluide en amont ou en aval de la motopompe permettrait également de faire varier le débit (principe non détaillé dans ce descriptif).

Les phases de fonctionnement sont les suivantes (FIG.3) :
1) L'utilisateur ouvre le robinet (41)
2) Le capteur de débit (5) détecte un flux qui va de de la source (1) vers l'utilisateur.
3) La motopompe (2) effectue une phase de gavage, consistant à délivrer un débit d'ECS important pendant une à deux secondes, afin que le fluide circule rapidement et alimente ainsi rapidement l'utilisateur.
   Durant cette phase, selon la demande au point de puisage, une partie du débit va à l'utilisateur et l'autre partie retourne en direction de la source via le tuyau (6), (voir figure 5 et figure 6).
4) La motopompe ajuste ensuite automatiquement son débit au besoin de l'utilisateur selon le principe suivant : si le flux va de l'utilisateur vers la source, la motopompe diminue son débit, et inversement, si le flux va de la source vers l'utilisateur, la motopompe augmente son débit.
5) Périodiquement (exemple : une fois tous les deux jours) l'automate autorise un retour d'ECS vers la source via le tuyau (6), afin de renouveler l'eau stagnante qu'il contient. Ceci dans le but de limiter la prolifération des bactéries et le risque d'exposition aux plus dangereuses d'entre elles telles que les légionnelles.

Nota : un simple capteur de débit (unidirectionnel), placé sur le tuyau (6) entre le point de puisage et l'endroit où débouche le tuyau de petite section (3), permettrait au dispositif de fonctionner sans être asservit. Toutefois, la recirculation dans le tuyau (6) rendrait le procédé tout aussi énergivore qu'une installation classique.

En référence à la figure 3, à titre d'exemple non limitatif, la motopompe (2) est constituée d'une pompe volumétrique à engrenage délivrant un débit constant de 12 litres/min sous une pression maximum de 70 bars et d'un moteur asynchrone monophasé 230V-50 Hz de puissance 2000 Watts. Le tuyau (3) est en polyamide extrudé de diamètre intérieur 4mm et de diamètre extérieur 6mm couramment utilisé dans l'industrie. Le tuyau (6) est un modèle en polyéthylène réticulé (PER) utilisé couramment en plomberie sanitaire, son diamètre intérieur est de 13mm et son diamètre extérieur est de 16mm. La vanne (41) est un robinet standard en plomberie sanitaire. Un automate programmable en communication avec le capteur de débit bidirectionnel (5), pourvu d'un régulateur de fréquence électrique régule le débit de la motopompe.
L'utilisateur situé à une distance de 25 mètres du dispositif (huit étages d'un immeuble d'habitation) peut ainsi obtenir de l'eau très chaude en moins de 4 secondes.

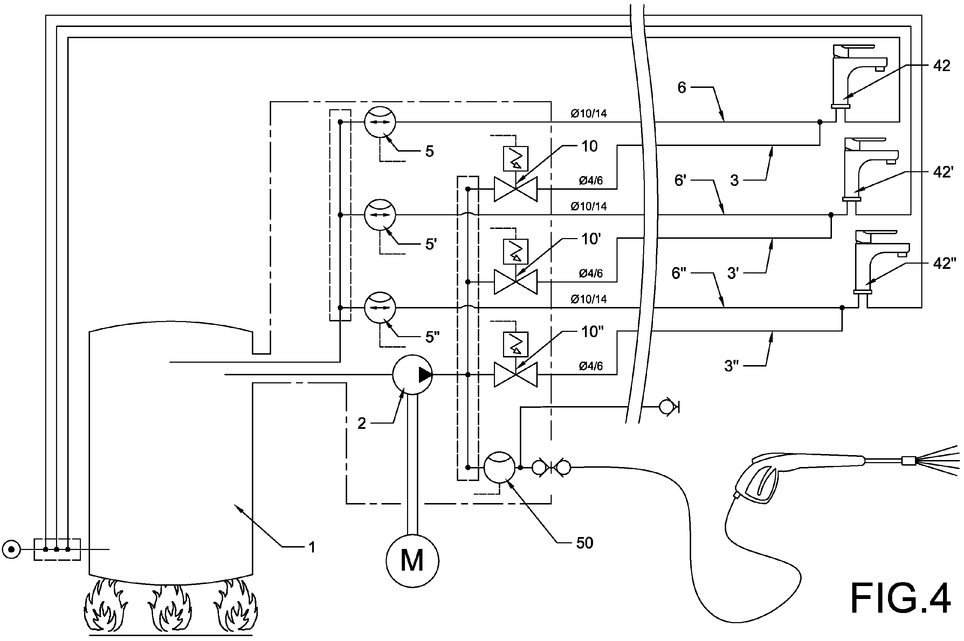

La figure 4 illustre le schéma hydraulique du dispositif fonctionnant comme précédemment (FIG.3), raccordé sur une installation domestique pourvue de 3 points de puisage.

Pour limiter la cylindrée et la puissance de la motopompe, ce dispositif est programmé (non détaillé dans ce descriptif) pour alimenter un maximum de deux robinets en même temps. Un improbable troisième utilisateur attendra l'eau chaude de façon traditionnelle.
Pour ce faire, chaque circuit doit être pourvu d'une électrovanne (10) qui oriente le flux d'ECS vers le ou les circuits sollicités. Nota : des vannes mécaniques haute pression incorporées aux robinets peuvent aussi assurer cette même fonction.
Lorsqu'un circuit est sollicité, l'automate commande l'ouverture et la fermeture de l'électrovanne respective au circuit, en même temps que la marche et l'arrêt de la motopompe. Nota : Les éléments de sécurité mécaniques et électriques, ainsi que l'automate ne sont pas représentés sur le schéma.

D'une façon générale, en fonction du réseau sanitaire propre à chacun et selon le besoin du/des utilisateur(s), le dispositif peut être raccordé et fonctionner de différentes façons. Selon d'autres variantes non détaillées:
- la motopompe peut être de technologie quelconque, volumétrique ou non, alimentée par une énergie quelconque (ex : électrique, pneumatique, mécanique ou hydraulique...) .
- la motopompe peut être de cylindrée et de puissance plus importante, pour permettre d'alimenter simultanément un grand nombre de points de puisage (exemple : un seul dispositif peut desservir un immeuble entier).
- le dispositif peut utiliser un principe de boucle de recirculation, via un réseau de tuyau de petite section, qui serait plus facile à calorifuger efficacement.
- la motopompe peut délivrer de l'eau à une température asservie au besoin de l'utilisateur.
- l'automatisme du dispositif peut être assuré par des composants logiques mécaniques et/ou hydrauliques et/ou électriques... ou grâce à un circuit électronique, ou plus simplement grâce à un automate préprogrammé ou programmable par l'installateur en fonction du besoin de l'utilisateur.

L'ensemble, constitué de la pompe, des différents raccords ainsi que des nourrices de distribution doit dans la mesure du possible, former un bloc compact, placé au plus près de la source pour être rapidement alimenté par l'ECS. Et pour ne pas refroidir le fluide lors de son passage, un moyen de chauffage peut y être incorporé afin de maintenir ces éléments à la même température que la source. Cette fonction peut être assurée par une résistance électrique ou par la circulation d'un fluide tempéré.
L'ensemble peut être pourvu d'une isolation thermique périphérique afin de limiter la déperdition calorifique et de limiter ainsi la consommation énergétique.
Nota : idéalement, la réserve d'eau chaude de type cumulus peut être conçue et fabriquée pour accueillir le dispositif, de façon à former un seul ensemble compact, pratique à raccorder demeurant à la même température que le fluide.

L'utilisation d'un tuyau de petite section apporte les avantages suivant :
- Pour un débit donné, l'ECS circule plus rapidement et alimente ainsi plus rapidement l'utilisateur.
- Il renferme peu d'énergie thermique, limitant ainsi le traditionnel gaspillage à chaque utilisation.
- Sa faible surface en contracte avec l'ECS limite le refroidissement du fluide lors de son premier passage.
- Il laisse peu de volume d'eau aux bactéries pour se développer.

Transférer un débit maximum standard d'ESC via un tuyau de petite section jusqu'au point de puisage, nécessite une pompe motorisée puissante afin de délivrer une pression d'alimentation capable de vaincre les pertes de charges.

Nota : Les pertes de charges sont en grande partie fonction de la section du tuyau, de sa longueur, du débit et de la température de l'eau. Il s'agit du frottement de l'eau en mouvement dans le tuyau qui se traduit par un échauffement (un dispositif suffisamment puissant combiné avec un tuyau de section et de longueur adapté, pourrait remplacer un chauffe-eau instantané). L'énergie électrique absorbée par la motopompe qui est quasi intégralement utilisée pour vaincre ces pertes de charges, se retrouvera de cette façon quasi intégralement restituée dans l'eau de l'utilisateur sous la forme de chaleur. Nota : Au moyen d'une boucle de refroidissement hydraulique, dans laquelle circule par exemple de l'eau froide puisée en amont de la source, les pertes joules de la motopompe relatives au rendement, peuvent aussi être canalisées pour être restituées dans l'eau de l'utilisateur.

En conclusion, quelle que soit la puissance absorbée par le dispositif, l'utilisateur ne verra pas sa facture énergétique augmentée avec son emploi (en association avec le chauffe-eau, le bilan énergétique est nul).

La motopompe doit idéalement être de technologie silencieuse et sans vibration. Elle doit être pourvue d'éléments de sécurité mécaniques et/ou électriques (Ex : clapet de décharge, pressostat, fusible etc.). Sa puissance pour délivrer un débit maximum standard d'ECS à un seul point de puisage à la fois, peut être comprise 350Watts et 3500Watts selon la longueur, la section du tuyau (3) et surtout les performances souhaitées. 1500W étant pour une installation standard, un bon rapport entre performance et puissance, correspondant à une pression d'alimentation avoisinant 60 bars. Nota : dans le cas d'un raccordement sur un chauffe-eau instantané, le débit de la pompe doit être adapté à la puissance maximale de chauffe.

Suivant le concept général de l'invention, la motopompe démarre et s'arrête à chaque utilisation. Cette fonction pourrait par exemple être assurée par un simple interrupteur actionné manuellement ou par une cellule de présence, ou même pas une minuterie, etc... Toutefois, le confort et l'efficacité ne seraient pas optimum. Pour interpréter le besoin de l'utilisateur au point de puisage et ainsi commander efficacement la motopompe à chaque utilisation, nous utiliserons un capteur de débit (unidirectionnel ou bidirectionnel) ou un capteur de pression suivant les cas.

Une option facultative du dispositif permet d'obtenir directement un débit d'eau sous pression permettant de raccorder des accessoires hydraulique (Ex : flexible et lance de nettoyage haute pression, débouche canalisation, brosse à sol, vérin ou moteur hydraulique, etc.)
Selon la configuration de l'habitation, le raccordement peut s'effectuer directement sur le dispositif, ou sur une conduite annexe qui chemine par exemple, de façon permanente jusqu'à l'extérieur de l'habitation.
L'ajout de composants spécifiques non détaillés dans ce descriptif, peuvent permettre de régler la pression de travail, le débit, la température ainsi que l'apport d'un additif dans l'eau (Ex : savon, produit anti mousse, etc.).

Le dispositif selon l'invention est principalement destiné à limiter le temps d'attente, le gaspillage d'eau potable, ainsi que le gaspillage énergétique lorsqu'un utilisateur demande de l'eau chaude ou mitigée à un point d'eau sanitaire. Le procédé permet d'éloigner considérablement la source d'eau chaude des points de puisage, palliant ainsi à d'éventuels problèmes d'encombrement, d'esthétique et/ou de risque de dégât des eaux dans l'habitat. Une option du dispositif permet de se raccorder avec une tuyauterie et une lance de nettoyage haute pression.

Une option facultative du dispositif permet d'obtenir directement un débit d'eau sous pression permettant de raccorder des accessoires hydraulique (Ex : flexible et lance de nettoyage haute pression, débouche canalisation, brosse à sol, vérin ou moteur hydraulique, etc.)
Selon la configuration de l'habitation, le raccordement peut s'effectuer directement sur le dispositif, ou sur une conduite annexe qui chemine par exemple, de façon permanente jusqu'à l'extérieur de l'habitation.
L'ajout de composants spécifiques non détaillés dans ce descriptif, peuvent permettre de régler la pression de travail, le débit, la température ainsi que l'apport d'un additif dans l'eau (Ex : savon, produit anti mousse, etc.).

Le dispositif selon l'invention est principalement destiné à limiter le temps d'attente, le gaspillage d'eau potable, ainsi que le gaspillage énergétique lorsqu'un utilisateur demande de l'eau chaude ou mitigée à un point d'eau sanitaire. Le procédé permet d'éloigner considérablement la source d'eau chaude des points de puisage, palliant ainsi à d'éventuels problèmes d'encombrement, d'esthétique et/ou de risque de dégât des eaux dans l'habitat. Une option du dispositif permet de se raccorder avec une tuyauterie et une lance de nettoyage haute pression.

## Revendications

1. Procédé pour économiser l'énergie calorifique et l'eau dans une installation sanitaire, comportant une source d'eau chaude (1), au moins un point de puisage (4) et au moins un tuyau (3) dont la section intérieure de passage est inférieure à 60mm2, le dit procédé étant **caractérisé en ce qu'**il comprend les étapes suivantes :
- détection d'une demande d'eau chaude au point de puisage,
- transfert instantané d'un débit d'eau chaude de la source (1) au point de puisage (4) via le tuyau (3) de petite section, au moyen d'une pompe motorisée (2) commandée en fonction de la demande au point de puisage.

2. Procédé selon la revendication 1 **caractérisé en ce que** la pression dans le tuyau (3) est rétablie en amont du point de puisage (4) de façon à disposer d'une pression standard , par exemple 3 bars, en plomberie sanitaire au point de puisage.

3. Procédé selon la revendication 1 ou 2 **caractérisé en ce que** l'eau chaude est mise sous pression en amont du tuyau de petite section (3) au moyen d'une pompe motorisée commandée par des moyens de détection, de façon à fournir rapidement et à la température souhaitée par l'utilisateur, l'intégralité du débit d'eau chaude demandée par l'utilisateur au point de puisage.

4. Procédé selon la revendication 3 **caractérisé en ce qu'**il est mis en œuvre dans des installations sanitaires traditionnelles déjà pourvues d'au moins un tuyau traditionnel d'alimentation d'eau chaude (6) basse pression entre la source d'eau chaude et au moins un point de puisage.

5. Procédé selon l'une quelconque des revendications précédentes **caractérisé en ce que** le débit dans le tuyau de petite section (3) est asservi au besoin de l'utilisateur au point de puisage.

6. Dispositif de transfert instantané d'eau chaude pour la mise en œuvre du procédé selon la revendication 4, comprenant une source d'eau chaude (1), au moins un point de puisage (4) et au moins un premier tuyau (6) pourvu d'une première extrémité reliée à la source d'eau chaude et une deuxième extrémité reliée au point de puisage, le dit dispositif étant **caractérisé en ce qu'**il comprend :
- une motopompe (2) comprenant une entrée adaptée pour être reliée à la source d'eau chaude et une sortie,
- au moins un deuxième tuyau (3) dont la section intérieure de passage est inférieure à 60mm2 comprenant une première extrémité reliée à la sortie de la dite motopompe et une deuxième extrémité adaptée pour être relié à la deuxième extrémité du premier tuyau ou au point de puisage,
- un ou des moyens de détection aptes à commander la motopompe en fonction de la demande d'eau chaude au point de puisage (4).

7. Dispositif de transfert instantané d'eau chaude selon la revendication 6 **caractérisé en ce que** le tuyau de petite section (3) chemine à l'intérieur du premier tuyau (6).

8. Dispositif de transfert instantané d'eau chaude selon la revendication 6 ou 7 **caractérisée en ce que** les moyens de commande comprennent au moins un capteur de débit (5) détectant la circulation du fluide dans le tuyau (6) ou un capteur de pression (8) détectant la pression dans le tuyau (3).

9. Dispositif de transfert instantané d'eau chaude selon la revendication 8 **caractérisé en ce que** le capteur de débit (5) détecte le sens de l'écoulement ainsi que l'absence de flux dans le tuyau (6), de façon à interpréter la demande de l'utilisateur au point de puisage pour y asservir le débit dans le tuyau (3), évitant ou réduisant ainsi au minimum toute recirculation d'eau chaude dans le premier tuyau (6).

## Patentansprüche

1. Verfahren zum Sparen von Wärmeenergie und Wasser in einer sanitären Einrichtung, umfassend eine Warmwasserquelle (1), mindestens eine Zapfstelle (4) und mindestens ein Rohr (3), dessen innerer Durchgangsabschnitt weniger als 60 mm² beträgt, wobei das genannte Verfahren **dadurch gekennzeichnet ist, dass** es die folgenden Schritte umfasst:
- Erkennung eines Warmwasserbedarfs an der Zapfstelle,
- sofortige Weiterleitung einer Warmwassermenge von der Quelle (1) zur Zapfstelle (4) über das Rohr (3) mit kleinem Querschnitt mittels einer motorisierten Pumpe (2), die in Abhängigkeit von dem Bedarf an der Zapfstelle gesteuert wird.

2. Verfahren nach Anspruch 1, **dadurch gekennzeichnet, dass** der Druck im Rohr (3) strömungsaufwärts von der Zapfstelle (4) wieder hergestellt wird, um einen Standarddruck, beispielsweise 3 bar, in Sanitärvorrichtungen an der Zapfstelle aufzuweisen.

3. Verfahren nach Anspruch 1 oder 2, **dadurch gekennzeichnet, dass** das Warmwasser strömungsaufwärts von dem Rohr mit kleinem Querschnitt (3) mittels einer motorisierten Pumpe, die durch Erkennungsmittel gesteuert wird, unter Druck gesetzt wird, um schnell, und mit der vom Benutzer gewünschten Temperatur die gesamte, vom Benutzer angeforderte Warmwassermenge an die Zapfstelle zu liefern.

4. Verfahren nach Anspruch 3, **dadurch gekennzeichnet, dass** es in herkömmlichen sanitären Einrichtungen implementiert wird, die bereits mit mindestens einem herkömmlichen Niederdruck-Warmwasserversorgungsrohr (6) zwischen der Warmwasserquelle und mindestens einer Zapfstelle versehen sind.

5. Verfahren nach einem der vorhergehenden Ansprüche, **dadurch gekennzeichnet, dass** die Menge in dem Rohr mit kleinem Querschnitt (3) nach Bedarf vom Benutzer an der Zapfstelle gesteuert wird.

6. Vorrichtung zur sofortigen Weiterleitung einer Warmwassermenge zur Durchführung des Verfahrens nach Anspruch 4, umfassend eine Warmwasserquelle (1), mindestens eine Zapfstelle (4) und mindestens ein erstes Rohr (6), das mit einem ersten Ende, das mit der Warmwasserquelle verbunden ist, und einem zweiten Ende das mit der Zapfstelle verbunden ist, versehen ist, wobei die genannte Vorrichtung **dadurch gekennzeichnet ist, dass** sie umfasst:
- eine Motorpumpe (2), die einen Einlass umfasst, der dazu geeignet ist, an die Warmwasserquelle angeschlossen zu werden, und einen Auslass,
- mindestens ein zweites Rohr (3), dessen innerer Durchgangsabschnitt weniger als 60 mm² beträgt, das ein erstes Ende umfasst, das mit dem Auslass der genannten Motorpumpe verbunden ist, und ein zweites Ende, das dazu geeignet ist, mit dem zweiten Ende des ersten Rohrs oder mit der Zapfstelle verbunden zu werden,
- ein oder mehrere Erkennungsmittel, die in der Lage sind, die Motorpumpe entsprechend dem Bedarf an Warmwasser an der Zapfstelle (4) zu steuern.

7. Vorrichtung zur sofortigen Weiterleitung einer Warmwassermenge nach Anspruch 6, **dadurch gekennzeichnet, dass** das Rohr mit kleinem Querschnitt (3) innerhalb des ersten Rohrs (6) verläuft.

8. Vorrichtung zur sofortigen Weiterleitung einer Warmwassermenge nach Anspruch 6 oder 7, **dadurch gekennzeichnet, dass** die Steuermittel mindestens einen Durchflusssensor (5) umfassen, der die Zirkulation des Fluids in dem Rohr (6) erkennt, oder einen Drucksensor (8), der den Druck in dem Rohr (3) erkennt.

9. Vorrichtung zur sofortigen Weiterleitung einer Warmwassermenge nach Anspruch 8, **dadurch gekennzeichnet, dass** der Durchflusssensor (5) die Durchflussrichtung sowie das Fehlen eines Durchflusses in dem Rohr (6) erkennt, um den Bedarf des Benutzers an der Zapfstelle zu interpretieren, um die Menge in dem Rohr (3) zu steuern, wodurch eine Rückführung von Warmwasser in dem ersten Rohr (6) vermieden oder auf ein Minimum reduziert wird.

## Claims

1. A method for saving heat energy and water in a sanitary facility, consisting of a hot water source (1), at least one supply point (4) and at least one pipe (3), the inner cross-section of which is less than 60 mm², said method being **characterised in that** it comprises the following steps:
- detecting a requirement for hot water at the supply point,
- instantaneous transfer of a flow of hot water from the source (1) to the supply point (4) through the small-diameter pipe (3) using a motorised pump (2) that is controlled according to the requirement at the supply point.

2. The method according to claim 1, **characterised in that** the pressure in the pipe (3) is restored upstream from the supply point (4) such as to provide a standard pressure, for example 3 bars, in sanitary plumbing at the supply point.

3. The method according claim 1 or 2, **characterised in that** the hot water is put under pressure upstream from the small-diameter pipe (3) by means of a motorised pump controlled by detection means in order to quickly deliver the entire flow of hot water required by the user, at their desired temperature, at the supply point.

4. The method according to claim 3, **characterised in that** the method is implemented in existing conventional sanitary facilities already having a conventional pipe for supplying hot water (6) at low pressure between the source of hot water and at least one supply point.

5. The method according to any one of the preceding claims, **characterised in that** the flow rate in the small-diameter pipe (3) is adapted to the demands of the user at the supply point.

6. A device for the instantaneous transfer of hot water for implementing the method according to claim 4, comprising a source of hot water (1), at least one supply point (4) and at least one first pipe (6) provided with a first end linked to the source of hot water and a second end linked to the supply point, which device is **characterised in that** it comprises:
- a motorised pump (2) comprising an inlet that is adapted to be linked to the source of hot water and an outlet,
- at least one second small-diameter pipe (3), the inner cross-section of which is less than 60 mm², comprising a first end linked to the outlet of said motorised pump and a second end adapted to be linked to the second end of the first pipe or to the supply point,
- one or more means of detection for controlling the motorised pump according to the requirement for hot water at the supply point (4).

7. The device for the instantaneous transfer of hot water according to claim 6, **characterised in that** the small-diameter pipe (3) runs inside the first pipe (6).

8. The device for the instantaneous transfer of hot water according to claim 6 or 7, **characterised in that** the control means comprise at least one flow sensor (5) to detect the circulation of fluid in the pipe (6) or a pressure sensor (8) to detect the pressure in the pipe (3).

9. The device for the instantaneous transfer of hot water according to claim 8, **characterised in that** the flow sensor (5) detects the direction of the flow as well as the absence of flow in the pipe (6), such that it can interpret the demands of the user at the supply point in order to control the flow rate in the pipe (3), thus preventing or reducing to a minimum any recirculation of hot water in the first pipe (6).
